# FASCICULE DE BREVET EUROPEEN

(11) **EP 0 972 141 B1**
(45) Date de publication et mention de la délivrance du brevet: **17.07.2002**
(21) Numéro de dépôt: 99901664.5
(22) Date de dépôt: 29.01.1999
(51) Int. Cl.: F16D 13/70

(54) **EMBRAYAGE A FRICTION DOTE D'UN VOLANT FLEXIBLE**
REIBUNGSKUPPLUNG MIT FLEXIBELEM SCHWUNGRAD
FRICTION CLUTCH EQUIPPED WITH FLEXIBLE FLYWHEEL

(30) Priorité: 30.01.1998 FR 9801040
(43) Date de publication de la demande: 19.01.2000
(73) Titulaire: VALEO, 75017 Paris (FR)
(72) Inventeur: MOKDAD, Ayman, F-80000 Amiens (FR); HEMERYCK, Bruno, F-80160 Prouzel (FR)
(74) Mandataire: Gamonal, Didier
(86) Numéro de dépôt international: FR9900189
(87) Numéro de publication internationale: WO9939111

(56) Documents cités:
- EP-A- 0 385 752
- EP-A- 0 789 153
- FR-A- 1 257 799
- US-A- 5 515 745
- PATENT ABSTRACTS OF JAPAN vol. 014, no. 339 (M-1001), 23 juillet 1990 & JP 02 118228 A (MAZDA MOTOR CORP), 2 mai 1990

## Description

La présente invention concerne les embrayages à friction comportant un volant flexible de transmission de couple, notamment pour véhicules automobiles, du type de ceux décrits dans le document FR-A-1 257 799.

Ces volants comportent un disque flexible portant un plateau appartenant à un embrayage à friction.

Dans ce document, l'embrayage avec son volant est interposé dans la chaîne cinématique allant du moteur à combustion interne à la boîte de transmission du mouvement aux roues du véhicule.

Le disque comporte d'une part, à sa périphérie interne, un premier tronçon pour liaison en rotation de l'embrayage à friction avec l'arbre de sortie du moteur à combustion interne du véhicule, en l'occurrence le vilebrequin du moteur, et, d'autre part, à sa périphérie externe, un deuxième tronçon pour support d'un plateau formant dans une forme de réalisation plateau de réaction.

La flexibilité du disque est telle, que, compte tenu de l'inertie de l'embrayage, la fréquence propre de l'ensemble soit comprise entre cinquante et deux cents Hertz et plus précisément voisine de quatre-vingt-dix Hertz pour un véhicule de tourisme.

Cette fréquence propre, dénommée première fréquence, est une fréquence de flexion du volant, le disque effectuant alors un mouvement de nutation autour de son diamètre.

Des essais ont montré en dessous de deux cents Hertz l'existence d'une deuxième fréquence propre, dite fréquence de pompage, plus élevée que la première fréquence, dite fréquence de flexion.

Il peut en résulter un couplage des fréquences, une mauvaise filtration et l'apparition de bruit.

La présente invention a pour objet de pallier de manière simple et économique ces inconvénients.

Suivant l'invention, le rapport de la deuxième fréquence par rapport à la première fréquence est supérieur à 1,5.

Ainsi, on évite le couplage des fréquences et on obtient une solution peu bruyante.

En dessous de ce rapport, le disque devient trop souple.

Avantageusement le disque est conformé pour s'opposer à la force de débrayage.

Ainsi, on ne risque pas de déformer le disque. D'autres avantages apparaîtront à la lumière de la description et à la lumière des dessins dans lesquels :
- la figure 1 est une vue en coupe axiale d'un embrayage à friction doté d'un volant flexible selon l'invention ;
- la figure 2 est une demi-vue partielle en coupe du centre de l'embrayage pour une autre réalisation ;
- la figure 3 est une vue partielle en coupe de l'embrayage pour une seconde réalisation.

Dans ces figures est représenté un embrayage à friction pour un véhicule automobile à moteur à combustion interne doté d'un carter 1 et d'un vilebrequin 2 formant arbre menant. Le carter 3 d'une boîte de transmission de mouvement, ici une boîte de vitesses, se fixe sur le carter 1 du moteur.

Cette boîte de transmission présente un arbre d'entrée 4 formant arbre mené.

L'arbre 4 traverse le carter 3 et présente une extrémité libre 41 soutenue et centrée par un palier de centrage 40 porté par le vilebrequin 2 et intervenant entre l'arbre 4 et le vilebrequin. L'arbre 4 est également soutenu et centré par un roulement 42 porté intérieurement par le carter 3.

L'embrayage à friction intervient entre le vilebrequin 2, formant la partie de sortie de l'arbre du moteur de véhicule, et l'arbre 4. Cet arbre 4 est implanté dans l'espace délimité par les carters fixes 1,3.

L'embrayage permet d'accoupler à volonté de manière débrayable l'arbre menant 2 à l'arbre mené 4 et comporte un volant d'entraînement en rotation en deux parties 5, 6, un disque de friction 8, un plateau de pression 9, des moyens embrayeurs 101, des moyens débrayeurs 102, et un couvercle 11 doté à sa périphérie externe de moyens de fixation 114 pour fixation du couvercle au volant d'entraînement 5,6 formant volant de transmission de couple. Le couvercle 11 est de forme creuse et présente un fond 115 troué centralement. Le plateau de pression 9 est lié en rotation au couvercle 11 tout en pouvant se déplacer axialement.

Les moyens embrayeurs 101 prennent appui sur le fond 115 du couvercle 11 pour action sur le plateau de pression 9 et serrage du disque de friction 8 entre le plateau 9 et le volant d'entraînement 5,6, solidaire en rotation du vilebrequin 2.

Le disque de friction 8 présente à sa périphérie externe deux garnitures de friction 82 disposées de part et d'autre d'un disque de support 81 accouplé à un moyeu 83 cannelé intérieurement-pour liaison en rotation du disque de friction 8 avec l'arbre d'entrée 4 présentant pour ce faire une portion cannelée 43, extérieurement pour coopération avec les cannelures du moyeu 83.

De manière connue, les garnitures 82 sont solidaires, ici par rivetage, du support 81 fragmenté ici à sa périphérie externe en pales élastiques axialement.

Ainsi les garnitures 82 sont adaptées à être serrées axialement de manière progressive entre le plateau 9 et le volant 5, qui, ici, est flexible axialement et rigide dans le sens circonférentiel.

Bien entendu, les garnitures 82 peuvent être fixées par collage directement sur les pales ou sur un élément en matière élastique lui-même collé sur le support 81. Ce support 81 peut être dédoublé avec intervention d'un élément élastique tel qu'une pluralité de protubérances ou un bloc en élastomère, entre les deux parties du support 81 et collage ou brasage des garnitures sur les faces externes des parties du support 81, comme décrit dans le document FR-A-2 652 397 auquel on se reportera pour plus de précisions.

Les solutions de fixation des garnitures sans rivets de fixation sont favorables car elles autorisent, pour une épaisseur donnée des garnitures 82, une plus grande usure des garnitures.

Ce support 81 avec ses garnitures 82, forme l'élément d'entrée du disque de friction 8 et est accouplé de manière rigide ou élastique avec le moyeu 83, formant l'élément de sortie du disque de friction. Par exemple, le support 81 peut être fixé à sa périphérie interne sur un voile solidaire du moyeu 83.

Ici, le support 83 est solidaire de deux rondelles de guidage disposées de part et d'autre d'un voile de moyeu.

Ces rondelles de guidage sont reliées entre elles par des entretoises traversant axialement le voile de moyeu.

Des ressorts sont montés dans des fenêtres réalisées en vis à vis dans des rondelles de guidage et le voile de moyeu.

Le support 81 est accolé à l'une des rondelles de guidage et est fixé à celle-ci à l'aide de colonnettes traversant chacune à jeu circonférentiel une ouverture du voile de moyeu. Le voile de moyeu peut être relié rigidement au moyeu 83.

Ici, le voile de moyeu engrène avec le moyeu et des ressorts de faible raideur interviennent entre le voile de moyeu et le moyeu 83. Des moyens de frottement à action axiale interviennent également entre le voile de moyeu et les rondelles de guidage. Par simplicité, toutes les pièces précitées n'ont pas été numérotées car ce type de disque de friction 8 est décrit par exemple dans le document FR-A- 2 693 778, auquel on pourra se reporter pour plus de précisions.

Dans ce document, sont décrits également des modes de réalisation du support pour rendre celui-ci axialement élastique et donc rendre le disque de friction progressif sachant que les garnitures peuvent être fixées par collage directement sur les pales et/ou les languettes du support.

Le volant flexible de transmission de couple comporte un disque 5 portant à sa périphérie externe un plateau 6, présentant dorsalement une face de friction 60 pour la garniture de friction 82 adjacente du disque de friction 8.

Le plateau de pression 9 présente frontalement une face de friction 90 pour l'autre garniture de friction 82.

Les plateaux 8 et 9 sont en matière moulable, ici en fonte, tandis que le disque 5 est métallique, ici en tôle emboutie.

Il est rigide dans le sens circonférentiel et flexible axialement.

Ainsi qu'on l'aura compris, le plateau 6 forme le plateau de réaction de l'embrayage et les garnitures de friction 82 sont adaptées a être serrées entre les faces de friction 60, 90 des plateaux 6,9. Ces faces 60, 90 sont perpendiculaires à l'axe de symétrie axiale X-X de l'embrayage monté rotatif, lorsque le moteur tourne, autour de l'axe X-X sachant que les arbres 2 et 4 sont, exception faite des tolérances de montage, alignés et ont pour axe de symétrie axiale l'axe X-X.

Les garnitures de frottement 82 sont donc normalement serrées sous l'action des moyens embrayeurs 101 entre les plateaux 5, 6.

L'embrayage est donc normalement engagé (embrayé) et le couple est transmis de l'arbre moteur 2 (le vilebrequin) à l'arbre mené 4 (l'arbre d'entrée) via le volant flexible 5,6 de transmission de couple, sachant que le disque 5 flexible est solidaire en rotation du vilebrequin 2.

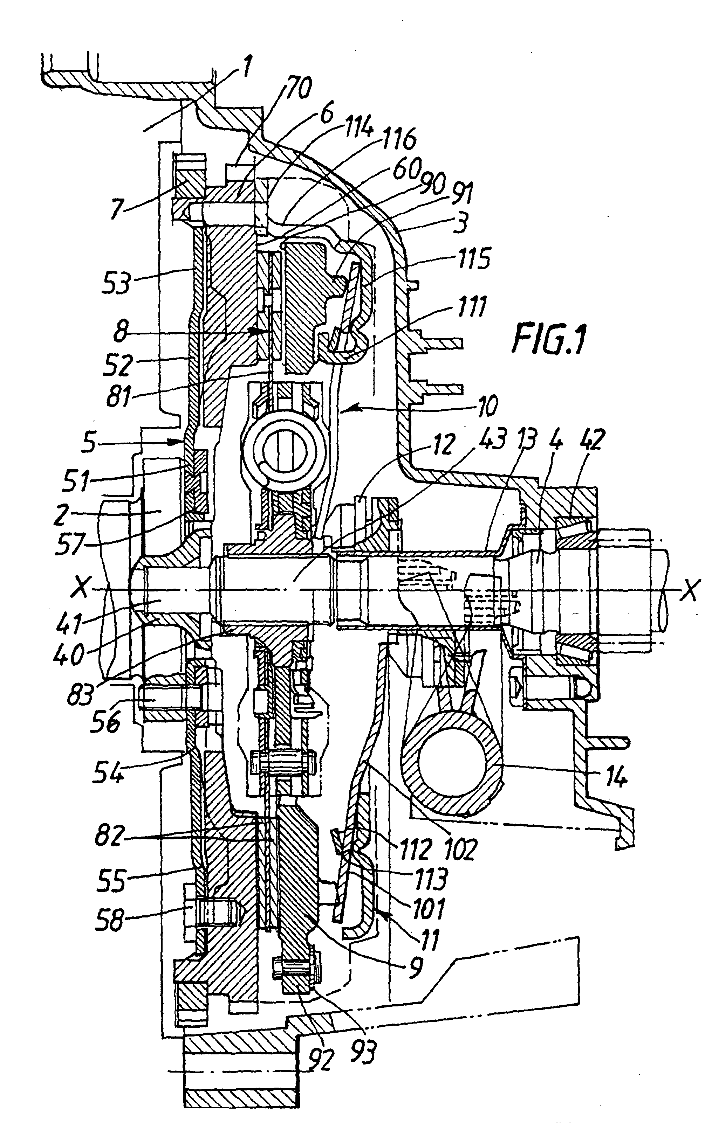

Ici le couvercle 11 a une forme d'assiette creuse et les moyens de fixation 114 consistent en un rebord radial dirigé radialement en direction opposée à l'axe X-X. Ce rebord est doté de trous pour le passage d'organes de fixation. Pour ce faire, le plateau de réaction 6 présente, en correspondance avec chaque trou du rebord 114, un trou taraudé ici borgne. Plus précisément, les organes de fixation consistent en des vis non représentées et on voit dans la partie haute de la figure 1 un trou taraudé (non référencé) en correspondance avec un trou de passage (non référencé) réalisé dans le rebord 114 pour passage de la partie filetée de la vis se vissant dans le trou taraudé du plateau de réaction 6.

En variante, les organes de fixation consistent en des rivets. Ici, le rebord 114 est relié au fond 115 du couvercle 11 par une jupe annulaire d'orientation axiale 116 entourant le plateau de pression 9 et les garnitures 82 du disque de friction 8. Le plateau de réaction 6 a une forme plate. Bien entendu, en variante, le plateau de réaction 6 peut présenter à sa périphérie externe une jupe annulaire d'orientation axiale entourant les garnitures de friction 82 et éventuellement une partie du plateau de pression 9. Dans ce cas, la jupe 116 du couvercle 11 est plus courte axialement.

Bien entendu, en variante, pour création d'un module comprenant le disque de friction 8, la jupe du couvercle est fixée directement de manière détachable ou non détachable sur le plateau de réaction comme décrit par exemple dans le document DE-A-43 09 570. Dans ce cas, on voit que la couronne de démarreur peut entourer la jupe du couvercle 11 comme visible à la figure 4 de ce document DE-A-43 09 570. La jupe 116 du couvercle peut être fixée par sertissage au plateau de réaction. Pour plus de précisions, on se reportera à ce document dont le contenu est considéré comme incorporé à la présente demande.

Ici les moyens embrayeurs 101 et débrayeurs 102 sont monoblocs et appartiennent à une même pièce annulaire 10 de forme tronconique à l'état libre. Cette pièce 10 est appelée diaphragme et présente une partie périphérique 101 annulaire et continue en forme de rondelle Belleville, prolongée radialement vers l'intérieur par une partie centrale fragmentée en doigts radiaux 102 par des fentes.

Le diaphragme 10 est monté de manière basculante sur le couvercle 11, plus précisément sur le rebord 115 de celui-ci, comme dans le document FR-A-2 585 124. Ainsi, le fond 115 du couvercle 11 porte un appui primaire 113, formé ici par emboutissage du fond 115, et présente des pattes 111 d'orientation axiale issues par découpe et pliage du fond 115 du couvercle 11, ici en tôle emboutie.

Ces pattes 111 traversent des orifices élargis (non référencés) formés à la périphérie interne de la rondelle Belleville 101 du diaphragme 10 troué centralement par passage de l'arbre 4.

Ces orifices élargis forment les fonds des fentes borgnes délimitant deux à deux les doigts 102 du diaphragme 10. Ces doigts 102 constituant les moyens débrayeurs de l'embrayage.

L'extrémité libre des pattes 111, après traversée du diaphragme 10, est pliée radialement en direction opposée à l'axe X-X pour formation d'un coude de calage pour une couronne 112 conformée à sa périphérie externe pour ménager un appui secondaire en regard de l'appui primaire 113.

La couronne 112 est de forme tronconique et est engagée à sa périphérie interne sur les pattes axiales 111 en étant interposée entre les extrémités libres pliées des pattes et le diaphragme 10. La périphérie externe de la rondelle Belleville 101 s'appuie lorsque l'embrayage est engagé - garnitures 82 serrées - sur un bossage annulaire fractionné 91, que présente, radialement au-dessus des appuis 112, 113, la face dorsale du plateau de pression 9 lié, de manière connue, en rotation au couvercle 11 avec mobilité axiale.

La périphérie interne de la rondelle Belleville 101 est interposée de manière basculante entre les appuis primaire 113 et secondaire 112. Le couvercle 11 porte ainsi des moyens d'assemblages 111, 112, 113 pour montage basculant du diaphragme sur le couvercle 11. Bien entendu, ces moyens peuvent avoir une autre forme et comporter des colonnettes fixées au fond 115 du couvercle 11. Ces colonnettes traversent les orifices élargis du diaphragme 10 et portent des joncs de basculement entre lesquels est interposé le diaphragme 10.

Les joncs forment les appuis primaire et secondaire. Ce type de réalisation est représenté dans le document US-A-3 299 735, qui montre également les vis de fixation du rebord du couvercle au plateau de réaction. Ainsi, comme dans ce document, le rebord 114 est pincé entre le plateau de réaction 6 et les têtes des vis de fixation.

Dans ce document US-A-3 299 735, le plateau de pression présente à sa périphérie externe des pattes, formant tenons, engagées à coulissement axial dans des rainures, formant mortaises, et ménagées dans la jupe du couvercle. Ainsi, le plateau de pression est lié en rotation au couvercle par une liaison du type tenons-mortaises autorisant un déplacement axial du plateau de pression. Ce type de liaison est envisageable ici.

Néanmoins, à la figure 1, cette liaison est réalisée de manière connue à l'aide de languettes 93 élastiques axialement.

Ces languettes 93, ici d'orientation tangentielle, sont fixées chacune à l'une de leurs extrémités à une patte radiale 92, que présente en saillie à sa périphérie externe le plateau de pression 9, et à l'autre de leurs extrémités à une plage que présente le rebord 114, ladite plage étant décalée axialement par rapport aux parties du rebord 114 servant à l'appui des têtes des vis de fixation. La jupe 116 du couvercle 11 est échancrée pour passage des pattes 92, la fixation des languettes étant effectuée par rivetage.

Ainsi, le diaphragme 10, le plateau de pression 9 et le couvercle 11 forment un ensemble unitaire appelé mécanisme d'embrayage que l'on rapporte sur le plateau de réaction 6. Ici, la couronne du démarreur 7 est portée de manière classique par la périphérie externe du plateau 6, qui présente également une cible d'allumage 70.

La commande de désengagement de l'embrayage est réalisée ici de manière mécanique à l'aide d'une butée de débrayage 12 agissant en poussant sur l'extrémité interne des doigts 102 du diaphragme, l'embrayage étant du type poussé. Cette butée 12 est montée coulissante sur un tube-guide 13 fixé sur le carter 3 et traversée par l'arbre d'entrée 4. La butée 12 est soumise à l'action d'une fourchette de débrayage 14 actionnée par la pédale de débrayage via une transmission à câble.

Ainsi dans la partie haute de la figure 1 on a représenté l'embrayage en position désengagée (ou débrayée), les languettes 93 rappelant alors le plateau 9 en direction du fond 115 du couvercle 11 pour libérer les garnitures 82, tandis que, dans la partie basse, on a représenté l'embrayage en position engagée (ou embrayées, garnitures 82 serrées.

Lorsque l'embrayage est désengagé, le couple n'est pas transmis à l'arbre mené 4.

Bien entendu, la butée 12 peut être commandée hydrauliquement et appartenir par exemple au récepteur d'une commande concentrique hydraulique.

En variante, le déplacement de la butée est commandé par un actionneur piloté par un calculateur selon des programmes prédéterminés en fonction des informations provenant de capteurs détectant notamment la vitesse de rotation des arbres 2,4 et l'intention du conducteur de changer de vitesse. D'une manière générale, comme explicité dans le document FR-A-1 257 799, la commande de serrage et de desserrage des garnitures de friction 82 peut être de tout type approprié, par exemple mécanique et manuel ou encore à l'aide de moyens assurant une automaticité totale ou partielle, par exemple en fonction de la vitesse du vilebrequin 2, tels que des moyens centrifuges, pneumatiques, hydrauliques, magnétiques, électriques etc...

De même l'embrayage peut être du type tiré comme décrit dans le document US-A-3,583,537. Dans ce cas la périphérie externe de la rondelle Belleville du diaphragme prend appui sur le couvercle, tandis que la périphérie interne de cette rondelle Belleville prend appui sur le bossage du plateau de pression. Pour désengager l'embrayage on agit en tirant à l'aide de la butée de débrayage sur l'extrémité interne des doigts du diaphragme.

Bien entendu l'embrayage peut être équipé d'un mécanisme de rattrapage d'usure comme décrit dans le document FR-A-2 684 151.

Ce mécanisme est destiné à compenser l'usure des garnitures de friction 82 et à maintenir le diaphragme en position sensiblement constante lorsque l'embrayage est engagé. Ce mécanisme comporte un détecteur d'usure pilotant, lorsqu'une usure est détectée, un système de rampes et contre-rampes intervenant soit entre le fond du couvercle et l'appui primaire, soit entre le bossage du plateau de pression et le plateau de pression.

Pour plus de précisions on se reportera à ce document FR-A-2 684 151, notamment aux figures 36 et 37 de celui-ci.

Ici le volant 5,6 est fixé directement sur le vilebrequin 2. En variante le volant 5,6 peut être fixé sur un moyeu accouplé de manière élastique au vilebrequin du moteur du véhicule comme décrit dans le document EP-A-0 464 997 auquel on se reportera.

Dans ce cas le moyeu est monté à rotation par l'intermédiaire d'un palier sur une première masse solidaire du vilebrequin, le volant 5,6 appartenant à une deuxième masse.

Quoi qu'il en soit le volant 5,6 est un volant de transmission de couple lié en rotation au moteur du véhicule et monté dans la chaîne cinématique allant du moteur à la boîte de transmission de mouvement, ici aux roues du véhicule.

Ce volant comporte de manière précitée un disque flexible 5 présentant, d'une part, à sa périphérie interne, un premier tronçon 51 pour liaison en rotation du disque avec le vilebrequin 2 c'est-à-dire avec l'arbre moteur et, d'autre part, à sa périphérie externe un deuxième tronçon 53 pour support et fixation du plateau de réaction.

Ici le disque flexible est embouti comme dans le document EP-A-0 464 997 précité. Le second tronçon 53 est décalé axialement par rapport au premier tronçon 51 et ce en direction du fond 115 du couvercle 11, c'est-à-dire en direction opposée au vilebrequin.

Le disque 5 s'étend perpendiculairement par rapport à l'axe X-X et est donc d'orientation transversale comme les faces de friction 60,90. Le premier 51 et le second tronçon 53 sont d'orientation transversale et parallèles entre eux.

Un tronçon intermédiaire 52 d'orientation transversale s'étend axialement entre les deux tronçons 51,53 et est relié, d'une part, au premier tronçon 51 par une première zone inclinée 54 et, d'autre part, au deuxième tronçon 53 par une deuxième zone inclinée 55.

Les zones 54,55 sont inclinées dans le même sens.

Un anneau 57 est fixé ici par sertissage au premier tronçon 51. Cet anneau 57 est centré par le tronçon 51 présentant pour ce faire à sa périphérie interne un manchon (non référencé) d'orientation axiale. Cet anneau 57 sert d'appui aux têtes de vis de fixation 56 traversant des passages en coïncidence axiale réalisés dans le tronçon 51 et l'anneau 57, pour venir se visser dans le vilebrequin 2.

L'anneau 57 constitue un anneau de pression en sorte que le tronçon 51 est pincé entre le vilebrequin 2 et l'anneau 57.

Bien entendu en variante la tête des vis peut prendre appui, par l'intermédiaire d'une rondelle évitant le desserrage de la vis, sur le premier tronçon 51, l'anneau 57 étant supprimé.

De même des vis 58 assemblent le deuxième tronçon 53 au plateau de réaction 6, le deuxième tronçon étant pincé entre les têtes des vis 58, traversant le tronçon 53 à la faveur de passages pour se visser dans le plateau 6, et le plateau de réaction 6.

Les tronçons 53,51 sont décalés radialement, le deuxième tronçon 53 étant implanté à la périphérie externe du plateau de réaction 6.

Bien entendu la jupe 116 du couvercle peut être assemblée au disque 5 et le plateau de réaction peut être assemblé par rivetage au deuxième tronçon 53.

En variante, comme décrit dans le document FR-A-2 740 188 les vis 58 comportent chacune une tête reçue dans un logement débouchant dans la face de friction 60, et la partie filetée des vis 58 se visse dans un taraudage réalisé dans le deuxième tronçon 52.

Des perçages sont alors réalisés en coïncidence axiale dans les garnitures 82, le support 81, le plateau 9, le diaphragme 10 et le fond 115 du couvercle pour accéder à l'aide d'un outil aux têtes des vis de fixation 58.

De même des perçages peuvent être réalisés en coïncidence axiale dans les doigts 102 du diaphragme 10 et le disque 8 pour accès aux têtes des vis de fixation 56.

D'une manière générale, les vis 56,58 peuvent être remplacées par des rivets ou d'autres organes de fixation et on peut inverser les structures, le taraudage pour les vis pouvant être réalisé dans les tronçons 51,53 ou respectivement dans le vilebrequin 2 et le plateau de réaction 6.

Une vis centrale unique de grande taille peut assembler le disque 5 au vilebrequin 2 et servir de support au palier 40.

Le tronçon 53 peut présenter des pattes ancrées dans le plateau de réaction 6 avec des trous ou des saillies pour parfaire l'ancrage, en sorte que la présence des organes de fixation 58 n'est pas obligatoire.

En variante les tronçons 51 et 53 peuvent être reliés entre eux par un tronçon tronconique.

D'une manière générale à la lumière des documents FR-A-2 740 188 et DE-A-43 09 570 on voit que le plateau de réaction 6, le disque de friction 8 et le mécanisme d'embrayage 9-10-11 peuvent former un module unitaire que l'on vient rapporter sur le disque 5.

Le couvercle 11 peut donc être fixé de manière non détachable sur le plateau de réaction 6. Il peut être également fixé de manière détachable sur le plateau de réaction 6.

Pour éviter la présence de vis de fixation traversant le couvercle 11, le diaphragme 10, le plateau de pression 11, le disque 8 et le plateau de réaction 8 il est possible de procéder comme à la figure 3.

Ainsi le couvercle 11 présente un rebord 114 avec deux séries de trous à savoir une première série de trous comme à la figure 1 pour fixation du couvercle sur le plateau de réaction 6 de manière précitée à l'aide d'une première série de vis. Une deuxième série de trous permet le passage d'une seconde série de vis de fixation 158 traversant un passage 214 réalisé dans le plateau de réaction pour venir se visser dans un taraudage 314 réalisé dans le disque 5 en coïncidence axiale avec le passage du plateau 6 et le trou du rebord 114.

Le taraudage peut être réalisé à l'aide d'un écrou fixé par soudage sur le disque.

Ainsi on livre le module unitaire plateau de réaction - mécanisme d'embrayage, avec insertion du disque de friction entre les plateaux 9-6, puis on fixe ce module, incluant le disque de friction, sur le disque 5 à l'aide de la deuxième série de vis pouvant être remplacée par d'autres organes de fixation tels que des rivets, boulons etc...

On supprime donc les vis 158 et les taraudages associés du plateau 6 ainsi plus résistant. En outre on visse dans le même sens les deux séries de vis.

En variante on peut souder, coller, sertir, encliqueter, emmancher à force etc le plateau de réaction sur le disque car le disque 5 est fixé par avance sur le vilebrequin et le mécanisme d'embrayage est démontable sans affaiblir les pièces 9,10,11 de celui-ci, ainsi que le disque 8 et le plateau de réaction 6.

Suivant une caractéristique importante, lorsque l'on désengage l'embrayage (opération de débrayage) le diaphragme 10 prend appui sur l'appui secondaire 102 et il en résulte une réaction sur le disque 5, qui tend à rapprocher le second tronçon 53 par rapport au premier tronçon 51.

Le disque 5 exerce donc une action élastique à l'encontre de la force de débrayage dirigée ici vers le plateau de réaction 6 ce qui est favorable.

Par contre dans le document EP-A-0 464 997 c'est l'inverse, l'embrayage étant du type tiré. Ainsi on éloigne le deuxième tronçon par rapport au premier tronçon ce qui risque de déformer le disque.

Grâce au tronçon 52 et aux zones inclinées 54,55, ou en variante au tronçon tronconique de raccordement entre les tronçons 51,53, le disque 5 résiste élastiquement lors du désengagement de l'embrayage, ce qui est favorable pour la filtration des vibrations engendrées par le moteur à combustion interne.

Bien entendu un ressort d'assistance, par exemple une rondelle Belleville, peut être associée au diaphragme, cette rondelle agissant en série ou en parallèle avec le diaphragme.

Les moyens embrayeurs peuvent donc comporter deux rondelles Belleville.

Bien entendu les moyens débrayeurs peuvent consister en des leviers de débrayage distincts, des moyens embrayeurs pouvant consister en des ressorts à boudin.

L'embrayage peut comporter deux disques de friction et donc un plateau de pression interne intermédiaire.

D'une manière générale, comme décrit dans le document FR-A-1 257 799, grâce au disque 5 flexible, les plateaux de pression 9 et de réaction 6 se trouvent désolidarisés des oscillations de flexion que peut prendre l'extrémité de l'arbre moteur (le vilebrequin 2) et les bruits disparaissent.

La flexibilité du disque n'est pas quelconque, elle est telle que, compte tenu de l'inertie de l'embrayage la fréquence propre de l'ensemble, compte tenu de l'inertie de l'embrayage, soit comprise entre cinquante et deux cents hertz et plus particulièrement soit ici voisine de 100 hertz pour un véhicule de tourisme.

Pour cette première fréquence il se produit un mouvement, ici réduit, de flexion du disque, plus précisément un mouvement de nutation autour de son diamètre.

Des essais ont montré que le disque équipé des plateaux 6,9 vibrait axialement pour une deuxième fréquence plus élevée que la première. Des contacts bruyants peuvent alors se produire entre le disque 5 et le plateau de pression.

D'une manière générale un couplage néfaste peut se produire entre les deux fréquences.

Des essais ont montré que pour certains rapports entre la deuxième fréquence F2 et la première fréquence F1 ces bruits et inconvénients disparaissaient.

Ainsi, suivant l'invention le rapport F2/F1 est supérieur ou égal à 1,5 et on élimine les bruits.

Dans un exemple de réalisation la première fréquence F1 est égale à 100 hertz et la deuxième fréquence à 150 hertz.

La première fréquence F1 est une fréquence de flexion et la deuxième fréquence F2 une fréquence de pompage et est par exemple inférieure à 200 hertz.

Bien entendu cela dépend des applications, la fréquence F2 de par le rapport selon l'invention pouvant être supérieure à 200 HZ.

Grâce à l'invention on évite un couplage des fréquences F1 et F2.

Bien entendu on choisit l'embrayage et le disque 5 pour déplacer la fréquence de flexion générée par le vilebrequin au-delà du régime de roulage du véhicule comme décrit dans le document EP-A-0 385 752. Cette fréquence est par exemple de 900 hertz au-delà de la zone de 200 à 500 hertz.

Grâce à l'invention le disque lors de l'opération de débrayage est suffisamment rigide pour les fréquences F1 et F2. En outre la forme du disque permet à celui-ci d'agir à l'encontre de la force de débrayage et de résister élastiquement.

Lorsque l'embrayage est du type tiré, il faut alors décaler axialement le deuxième tronçon 53 en direction du vilebrequin 2.

Bien entendu comme décrit dans le document FR-A-2 684 151 (figure 37) un frottement peut intervenir entre la périphérie interne du plateau de réaction 6 et la périphérie externe de l'anneau 57 ; une bague de frottement étant par exemple interposée entre lesdites périphéries.

Toutes les combinaisons sont envisageables.

Ainsi le volant flexible peut appartenir à un double volant amortisseur, comme décrit dans le document EP-A-0 464 997, et former la première masse de celui-ci en étant fixé directement au vilebrequin.

L'association d'un disque à garnitures de friction non fixées par rivetage sur le support 81 par exemple du type de celui décrit dans le document FR-A-2 652 397, en association avec un mécanisme de rattrapage d'usure, permet au diaphragme de travailler toujours dans la même position et donc, pour un couple donné à transmettre, de plus user les garnitures de friction 82, le tout sans augmenter l'inertie du disque de friction grâce à la fixation dépourvue de rivets. L'épaisseur utile des garnitures de friction est plus importante.

En outre le mécanisme de rattrapage d'usure est moins sensible aux vibrations.

Grâce à cela on augmente la durée de vie de l'embrayage.

Le volant flexible selon l'invention permet également d'augmenter la durée de vie de l'embrayage car il ménage les pièces de celui-ci.

L'association avec un double volant amortisseur du type de celui décrit dans le document EP-A-0 464 997 précité est également favorable.

L'embrayage peut comporter donc un double volant amortisseur équipé du volant flexible selon l'invention en association avec un mécanisme de rattrapage d'usure et un disque de friction pourvu de garnitures de friction non fixées par des rivets sur son support éventuellement dédoublé, ce disque étant accouplé par exemple de manière rigide au moyeu 83.

L'embrayage peut ainsi avoir une grande durée de vie, bien filtrer les vibrations grâce à son double volant et être silencieux grâce à son double volant et son volant flexible ménageant les composants de l'embrayage.

Bien entendu le mécanisme de rattrapage d'usure peut être intégré dans le volant flexible comme décrit par exemple dans le document FR-A-2 722 852.

La commande de la butée de débrayage peut être du type hydraulique.

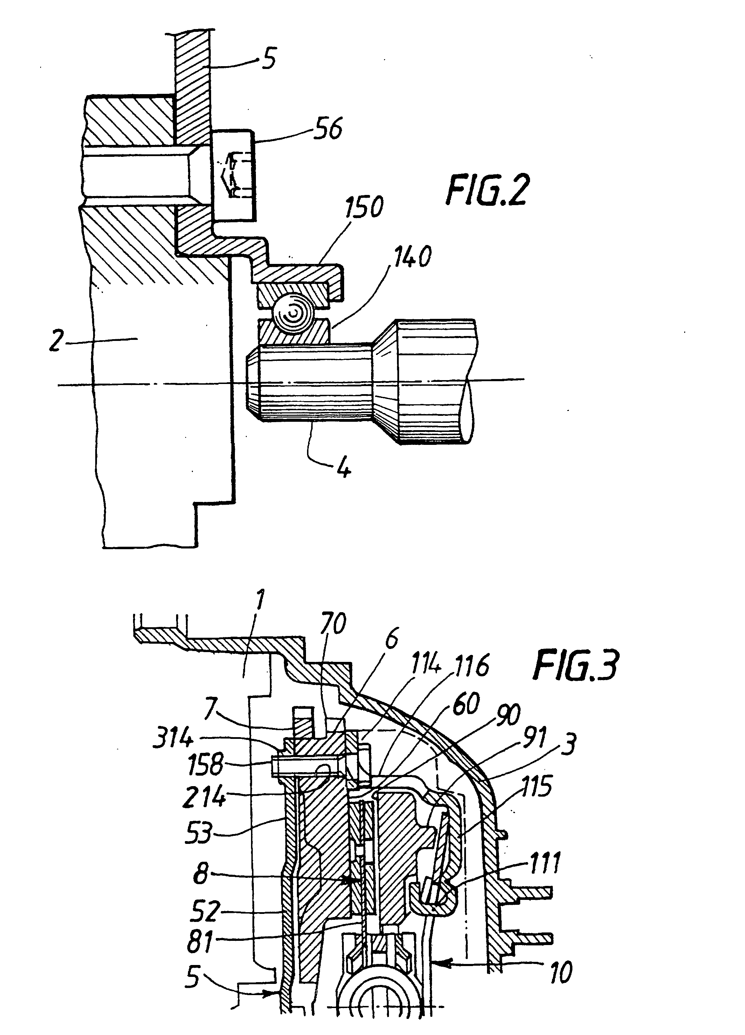

Comme visible à la figure 2 le disque 5 peut être prolongé centralement axialement par un manchon étagé 150 portant intérieurement un roulement pilote 140 pour l'arbre 3. Le roulement 140 remplace le palier 40 et permet de simplifier le vilebrequin 2 et de centrer l'extrémité de l'arbre 3. Le manchon est dirigé vers le couvercle 11.

## Revendications

1. Embrayage à friction intervenant entre un moteur à combustion interne et une boîte de transmission de couple et comportant un volant flexible (5,6) de transmission de couple comprenant un disque flexible (5) avec à sa périphérie interne un premier tronçon (51), pour liaison en rotation du disque flexible (5) à l'arbre du moteur à combustion interne, et à sa périphérie externe un deuxième tronçon (53), pour support d'un plateau (6) appartenant à l'embrayage, dans lequel l'embrayage à friction présente en dessous de 200 hertz une première fréquence de résonance (F1) et une deuxième fréquence de résonance (F2) de fréquence plus élevée que la première fréquence de résonance (F1), **caractérisé en ce que** le rapport des fréquences de résonance (F1,F2) - deuxième fréquence de résonance (F2)/première fréquence de résonance (F1) - est supérieur ou égal à 1,5.

2. Embrayage selon la revendication 1, **caractérisé en ce que** la première fréquence de résonance (F1) est voisine de 100 hertz.

3. Embrayage selon la revendication 2, **caractérisé en ce que** la deuxième fréquence de résonance est inférieure à 200 hertz.

4. Embrayage selon la revendication 1, **caractérisé en ce que** le deuxième tronçon (53) du disque flexible est décalé axialement par rapport au premier tronçon (51) et **en ce que** le disque flexible (5) est conformé entre ses deux tronçons (51,52) pour agir à l'encontre de la force de débrayage.

5. Embrayage selon la revendication 4, **caractérisé en ce que** l'embrayage est du type poussé et **en ce que** le deuxième tronçon (53) est décalé axialement par rapport au premier tronçon (5) en direction opposée au moteur à combustion interne.

6. Embrayage selon la revendication 4, **caractérisé en ce que** l'embrayage est du type tiré et **en ce que** le deuxième tronçon (53) est décalé axialement par rapport au premier tronçon (5) en direction du moteur à combustion interne.

7. Embrayage selon la revendication 4, **caractérisé en ce que** le deuxième tronçon (53) est relié au premier tronçon (51) par un tronçon de forme tronconique.

8. Embrayage selon la revendication 4, **caractérisé en ce qu'**un tronçon intermédiaire (52) est interposé axialement entre le premier (51) et le deuxième tronçon (53) et **en ce que** le tronçon intermédiaire (52) se raccorde, d'une part, à sa périphérie interne au premier tronçon (51) par une première zone inclinée (54) et, d'autre part, à sa périphérie externe au deuxième tronçon (53) par une deuxième zone inclinée (55) et **en ce que** les zones inclinées (54,55) sont inclinées dans le même sens.

9. Embrayage selon la revendication 1, **caractérisé en ce qu'**il comporte un dispositif de rattrapage d'usure et un disque de friction (8) avec des garnitures de friction (82) dépourvu de rivets de fixation.

10. Embrayage selon la revendication 1, **caractérisé en ce que** le premier tronçon (51) du disque flexible (5) est fixé sur le vilebrequin (2) du moteur à combustion interne.

11. Embrayage selon la revendication 1, **caractérisé en ce que** le premier tronçon (51) du disque est flexible et fixé sur un moyeu relié élastiquement au vilebrequin par une première masse et **en ce qu'**un palier intervient entre le moyeu et la première masse.

12. Embrayage selon la revendication 1, **caractérisé en ce que** le disque flexible (5) est prolongé centralement par un manchon (150) portant intérieurement un roulement pilote (140).

13. Embrayage selon la revendication 1, **caractérisé en ce qu'**il comporte un module d'embrayage comprenant le plateau de réaction (6), un disque de friction (8) présentant des garnitures de friction (83) interposées entre le plateau de réaction (6) et un plateau de pression (9) solidaire en rotation d'un couvercle (11) fixé sur le plateau de réaction (6) et **en ce que** le module est rapporté sur le disque flexible (5).

## Patentansprüche

1. Reibungskupplung, die zwischen einem Verbrennungsmotor und einem Getriebe zur Drehmomentübertragung zum Einsatz kommt und ein flexibles Schwungrad (5,6) zur Drehmomentübertragung umfaßt, das eine flexible Scheibe (5) mit einem an ihrem inneren Umfang angeordneten ersten Teilstück (51) zur drehfesten Verbindung der flexiblen Scheibe (5) mit der Welle des Verbrennungsmotors und einem an ihrem äußeren Umfang angeordneten zweiten Teilstück (53) als Träger für eine zur Kupplung gehörenden Platte (6) enthält, wobei die Reibungskupplung unterhalb von 200 Hertz eine erste Resonanzfrequenz (F1) und eine zweite Resonanzfrequenz (F2) aufweist, die höher als die erste Resonanzfrequenz (F1) ist,
**dadurch gekennzeichnet,**
**daß** das Verhältnis (F2/F1) der Resonanzfrequenzen (F1, F2) - zweite Resonanzfrequenz (F2) zu erster Resonanzfrequenz (F1) - größer als oder gleich 1,5 ist.

2. Kupplung nach Anspruch 1, **dadurch gekennzeichnet, daß** die erste Resonanzfrequenz (F1) in der Nähe von 100 Hertz liegt.

3. Kupplung nach Anspruch 2, **dadurch gekennzeichnet, daß** die zweite Resonanzfrequenz kleiner als 200 Hertz ist.

4. Kupplung nach Anspruch 1, **dadurch gekennzeichnet, daß** das zweite Teilstück (53) der flexiblen Scheibe im Verhältnis zum ersten Teilstück (51) axial versetzt ist und daß die flexible Scheibe (5) zwischen ihren beiden Teilstücken (51, 53) so gestaltet ist, daß sie der Ausrückkraft entgegenwirkt.

5. Kupplung nach Anspruch 4, **dadurch gekennzeichnet, daß** die Kupplung in gedrückter Konstruktion ausgeführt ist und daß das zweite Teilstück (53) im Verhältnis zum ersten Teilstück (51) in der zum Verbrennungsmotor entgegengesetzten Richtung axial versetzt ist.

6. Kupplung nach Anspruch 4, **dadurch gekennzeichnet, daß** die Kupplung in gezogener Konstruktion ausgeführt ist und daß das zweite Teilstück (53) im Verhältnis zum ersten Teilstück (51) in Richtung des Verbrennungsmotors axial versetzt ist.

7. Kupplung nach Anspruch 4, **dadurch gekennzeichnet, daß** das zweite Teilstück (53) durch ein kegelstumpfförmiges Teilstück mit dem ersten Teilstück (51) verbunden ist.

8. Kupplung nach Anspruch 4, **dadurch gekennzeichnet, daß** ein Zwischenteilstück (52) axial zwischen dem ersten (51) und dem zweiten Teilstück (53) eingefügt ist und daß sich das Zwischenteilstück (52) einerseits an seinem inneren Umfang durch einen ersten geneigten Bereich (54) an das erste Teilstück (51) und andererseits an seinem äußeren Umfang durch einen zweiten geneigten Bereich (55) an das zweite Teilstück (53) anschließt und daß die geneigten Bereiche (54, 55) in der gleichen Richtung geneigt sind.

9. Kupplung nach Anspruch 1, **dadurch gekennzeichnet, daß** sie eine Verschleißnachstellvorrichtung und eine Reibungskupplungsscheibe (8) mit Reibbelägen (82) ohne Befestigungsniete umfaßt.

10. Kupplung nach Anspruch 1, **dadurch gekennzeichnet, daß** das erste Teilstück (51) der flexiblen Scheibe (5) an der Kurbelwelle (2) des Verbrennungsmotors befestigt ist.

11. Kupplung nach Anspruch 1, **dadurch gekennzeichnet, daß** das erste Teilstück (51) der Scheibe flexibel und an einer Nabe befestigt ist, die durch eine erste Masse elastisch mit der Kurbelwelle verbunden ist, und daß zwischen der Nabe und der ersten Masse ein Lager zum Einsatz kommt.

12. Kupplung nach Anspruch 1, **dadurch gekennzeichnet, daß** die flexible Scheibe (5) mittig durch eine Muffe (150) verlängert ist, die innen ein Führungswälzlager (140) trägt.

13. Kupplung nach Anspruch 1, **dadurch gekennzeichnet, daß** sie ein Kupplungsmodul umfaßt, das einen Gegenanpreßplatte (6) und eine Reibungskupplungsscheibe (8) enthält, die Reibbeläge (83) aufweist, die zwischen der Gegenanpreßplatte (6) und einer Druckplatte (9) eingefügt sind, die drehfest mit einem an der Gegenanpreßplatte (6) befestigten Deckel (11) verbunden ist, und daß das Modul an der flexiblen Scheibe (5) angefügt ist.

## Claims

1. A friction clutch for acting between an internal combustion engine and a torque transmission unit, and including a flexible torque transmitting flywheel (5, 6) comprising a flexible disc (5) with, at its inner periphery, a first portion (51) for coupling the flexible disc (5) to the shaft of the internal combustion engine for relation therewith, and at its outer periphery a second portion (53) for supporting a plate (6) of the clutch, in which the friction clutch has, below 200 hertz, a first resonant frequency (F1) and a second resonant frequency (F2) which is higher than the first resonant frequency (F1), **characterised in that** the ratio of the resonant frequencies (F1, F2) - second resonant frequency (F2)/first resonant frequency (F1) - is greater than or equal to 1.5

2. A clutch according to Claim 1, **characterised in that** the first resonant frequency (F1) is close to 100 hertz.

3. A clutch according to Claim 2, **characterised in that** the second resonant frequency is less than 200 hertz.

4. A clutch according to Claim 1, **characterised in that** the second portion (53) of the flexible disc is offset axially with respect to the first portion (51), and **in that** the flexible disc (5) is configured between its two portions (51, 53) in such a way as to work against the declutching force.

5. A clutch according to Claim 4, **characterised in that** the clutch is of the push-to-release type, and **in that** the second portion (53) is offset axially with respect to the first portion (51) in a direction away from the internal combustion engine.

6. A clutch according to Claim 4, **characterised in that** the clutch is of the pull-to-release type, and **in that** the second portion (53) is offset axially with respect to the first portion (51) towards the internal combustion engine.

7. A clutch according to Claim 4, **characterised in that** the second portion (53) is joined to the first portion (51) through a portion of frusto-conical form.

8. A clutch according to Claim 4, **characterised in that** an intermediate portion (52) is interposed axially between the first portion (51) and the second portion (53), and **in that** the intermediate portion (52) is joined, firstly at its inner periphery to the first portion (51) by a first inclined zone (54), and secondly at its outer periphery to the second portion (53) by a second inclined zone (55), and **in that** the inclined zones (54, 55) are inclined in the same direction.

9. A clutch according to Claim 1, **characterised in that** it includes a wear compensating device and a friction disc (8) with friction liners (82) having no fastening rivets.

10. A clutch according to Claim 1, **characterised in that** the first portion (51) of the flexible disc (5) is fixed on the crankshaft (2) of the internal combustion engine.

11. A clutch according to Claim 1, **characterised in that** the first portion (51) of the disc is flexible and fixed on a hub which is coupled elastically to the crankshaft by a first mass, and **in that** a bearing is interposed between the hub and the first mass.

12. A clutch according to Claim 1, **characterised in that** the flexible disc (5) is extended in length centrally by a sleeve portion (150) which carries an internal rolling pilot bearing (140).

13. A clutch according to Claim 1, **characterised in that** it comprises a clutch module including the reaction plate (6), a friction disc (6) having friction liners (83) interposed between the reaction plate (6) and a pressure plate (9), which is fixed in rotation to a cover plate (11) secured on the reaction plate (6), and **in that** the module is attached on the flexible disc (5).
